# EUROPEAN PATENT SPECIFICATION

(11) **EP 1 800 919 B1**
(45) Date of publication and mention of the grant of the patent: **05.08.2009**
(21) Application number: 06126592.2
(22) Date of filing: 20.12.2006
(51) Int. Cl.: B60H 3/06

(54) **Airflow filter device and air-conditioning system for a vehicle**
Luftstromfiltervorrichtung und Kraftfahrzeugklimaanlage
Dispositif de filtrage d'air et système de climatisation pour véhicule

(30) Priority: 26.12.2005 JP 2005372083
(43) Date of publication of application: 27.06.2007
(73) Proprietor: Sanden Corporation, Isesaki-shi, Gunma 372-8502 (JP)
(72) Inventor: Kawasaki, Masatoshi, Isesaki-shi Gunma 372-8502 (JP); Isobe, Toshimi, Isesaki-shi Gunma 372-8502 (JP); Takahashi, Shinya, Isesaki-shi Gunma 372-8502 (JP)
(74) Representative: Haley, Stephen

(56) References cited:
- EP-A- 1 065 081
- EP-A- 1 285 686
- EP-A- 1 459 921
- DE-A1- 10 019 607

## Description

The present invention relates to an airflow filter device, and an air-conditioning system for a vehicle, in particular a construction machine, using the same device.

An airflow filter device is employed, for example, in an air-conditioning system for a vehicle, and the conditioned air that is purified by the filter device is supplied into the vehicle's passenger compartment.

More specifically, the air-conditioning system has an air-conditioning unit housing that is disposed inside an instrument panel located at the front of the passenger compartment. Accommodated in the air-conditioning unit housing are a blower that produces an airflow running from an air inlet to an air outlet of the housing and an evaporator for cooling the airflow. A filter of the filter device is also installed in the housing to be located upstream of the blower. The filter removes dust and lint in the airflow.

Filter clogging in the air-conditioning system diminishes the air-conditioning performance of the filter device. Therefore, the filter device is provided with detection means for detecting filter clogging.

For instance, a vehicle airconditioner that is disclosed in Japanese Patent No. 3588887 has a pressure sensor in between a blower and a filter as filter-clogging detection means. Japanese Patent Application Publication No. 61-259043 discloses an airconditioner, albeit for a room, which has a controller including an ammeter for measuring the value of the electric current supplied to the motor for a blower. With the techniques disclosed in these documents, the degree of filter clogging is presumably detectable on the basis of change in the pressure of the space between the blower and the filter or change in the current supplied to the motor for driving the blower.

The closest prior art document DE 100 19 607 discloses another airflow filter device wherein a warning to clean the filter is provided when a value related to the filter clogging exceeds one threshold value.

The filter judged as being clogged is removed from the air-conditioning unit housing to be discarded. Even such a filter is recyclable if it is subjected to a cleaning treatment for removing dust and lint, for example, by air blow or the like, and is then reduced in its ventilation resistance. To discard recyclable filters not only requires time and labor for separation but also incurs high environmental load, and is also uneconomical. As a result of repeated cleaning, however, unremovable dust and lint are accumulated in the filter, so that there is a limit to recycling.

It is an object of the present invention to provide an airflow filter device that cleans and recycles a filter and yet properly detects filter replacement time, the device being environmentally friendly and reduced in running cost, an air-conditioning system for a vehicle, in particular a construction machine, using the device.

In order to achieve the object, the airflow filter device of the present invention has a filter for purifying an airflow, a clogging detection unit for detecting clogging in the filter, and a warning unit that provides a warning to clean the filter when the number of times of clogging in the filter, which is detected by the clogging detection unit, is equal to or less than a threshold value, and provides a warning to replace the filter when the number of times of clogging exceeds the threshold value.

In the airflow filter device of the present invention, the warning unit provides a warning to clean or replace the filter according to the number of times of clogging which is detected by the filter clogging detection unit. Therefore, a person who is engaged in monitoring and maintenance of the filter device cleans and recycles the filter and yet can properly know filter replacement time. This decreases the number of filters to be discarded. Consequently, the filter device is environmentally friendly and is reduced in running cost.

Preferably, the warning unit includes a reset unit for resetting the number of times of clogging. In the preferred airflow filter device, the warning unit includes the reset unit for resetting the number of times of clogging, so that the warning unit is prevented from providing a warning for filter replacement right after the filter is changed.

Preferably, the reset unit includes a manual switch. In the preferred airflow filter device, the reset unit includes the manual switch, so that the warning unit is prevented by means of a simple construction from providing a warning for filter replacement right after the filter is changed.

The air-conditioning system for a vehicle according to the present invention has the airflow filter device and an air-conditioning unit housing in which the filter is disposed inside to be positioned upstream of a blower and an evaporator as viewed in a flowing direction of the airflow.

The air-conditioning system for a vehicle according to the present invention has the airflow filter device described above. Therefore, a person who is engaged in monitoring and maintenance of the filter device and an occupant clean and recycle the filter and yet can properly know filter replacement time. This decreases the number of filters to be discarded. Consequently, the air-conditioning system for a vehicleis environmentally friendly and is reduced in running cost.

Preferably, the clogging detection unit measures at least one of a value of electric current supplied to a motor for driving the blower, pressure in between the filter and the blower, and a flow rate of the airflow near the filter, and detects clogging in the filter based upon an obtained measurement result.

In the preferred air-conditioning system for a vehicle and the preferred air-conditioning system for a construction machine, the clogging detection unit measures at least one of the value of the electric current supplied to the motor for driving the blower, the pressure in between the filter and the blower, and the flow rate of the airflow near the filter, and detects filter clogging based upon an obtained measurement result. This makes it possible to reliably detect filter clogging and prevent a deterioration in air-conditioning performance.

Preferably, the clogging detection unit repeats the measurement and determines that clogging occurs in the filter when variation from an initial value in the obtained measurement result exceeds a prescribed value.

In the preferred air-conditioning system for a vehicle and the preferred air-conditioning system for a construction machine, the clogging detection unit repeats the measurement and determines that clogging occurs in the filter when the variation from the initial value in the obtained measurement result exceeds the prescribed value. Accordingly, filter clogging is detected without fail, and the deterioration of the air-conditioning performance is prevented.

### In the Drawings;

The present invention will become more fully understood from the detailed description given hereinbelow and the accompanying drawings which are given by way of illustration only, and thus, are not limitative of the present invention, and wherein:
FIG. 1 is a schematic construction view of an air-conditioning system for a vehicle according to a first embodiment;
FIG. 2 is a block diagram showing a schematic construction of a control circuit that is employed in the vehicle air-conditioning system of FIG. 1; and
FIG. 3 is a flowchart showing an interrupt routine that is executed by a controller of FIG. 2.

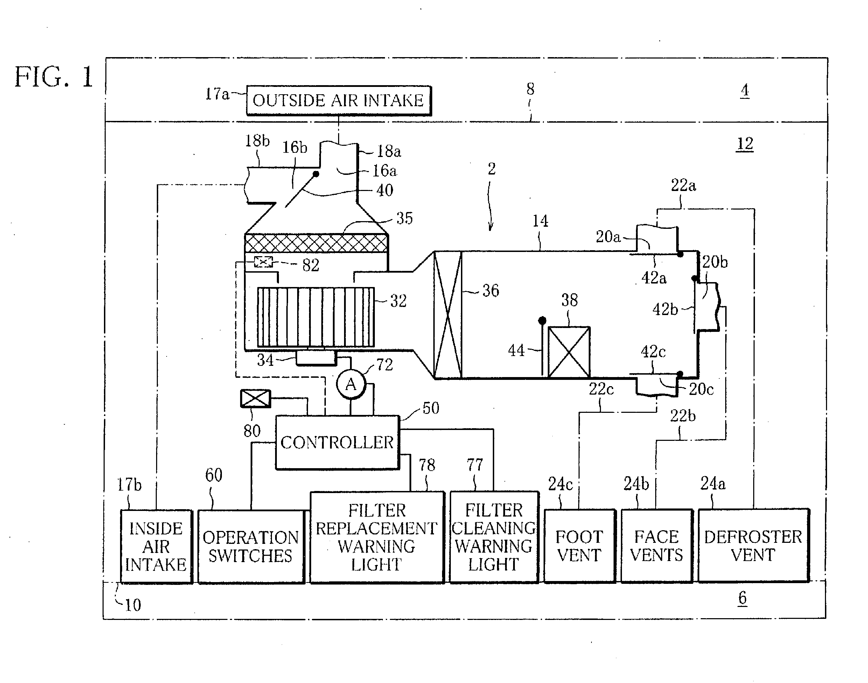

FIG. 1 shows an outline of an air-conditioning system for a vehicle according to a first embodiment of the present invention. The air-conditioning system has an air-conditioning unit 2.

Specifically, an engine room 4 and a passenger compartment 6 of a vehicle are separated by a partition 8. In a front portion of the passenger compartment 6, a machine room 12 is provided in between the partition 8 and an instrument panel 10. The air-conditioning unit 2 is installed in the machine room 12.

The air-conditioning unit 2 has a housing 14. Defined in the inside of the housing 14 is a part of an air passage for blowing conditioned air into the passenger compartment 6.

To be more specific, an air inlet 16a for taking in outside air and an air inlet 16b for circulating inside air are open in one end portion of the housing 14. The air inlet 16a is connected with an outside air duct 18a having an outside air intake 17a that opens to the outside of the vehicle. The air inlet 16b is connected with an inside air duct 18b having an inside air intake 17b that opens to the passenger compartment 6.

Three air outlets 20a, 20b and 20c are open in the other end portion of the housing 14. The air outlets 20a, 20b and 20c are connected with a defroster duct 22a, a face duct 22b, and a foot duct 22c, respectively. The defroster, face and foot ducts 22a, 22b and 22c have defroster, face and foot vents 24a, 24b and 24c, respectively, which open in different positions of the passenger compartment 6.

A blower 32 is installed in the housing 14. The blower 32 is located on the side of the air inlets 16. The blower 32 is driven to rotate by a blower motor 34, to thereby produce an airflow running from the air inlets 16 to the air outlets 20.

In the housing 14, a filter 35 is placed in between the air inlets 16 and the blower 32. The filter 35 has an area that is virtually equal to a cross sectional area of a portion of the housing 14, to which the filter 35 is fixed. As a result, the airflow produced by the blower 32 passes through the filter 35 without fail. In this process, dust and lint in the airflow attach to the filter 35, so that the airflow is purified. In other words, the filter 35 is a dust filter.

Furthermore, an evaporator 36 is disposed in the housing 14. The evaporator 36 is placed downstream of the blower 32 as viewed in the flowing direction of the airflow. A front face of the evaporator 36, which is located on the side of the blower 32, has an area that is virtually equal to a cross sectional area of a portion of the housing 14, in which the evaporator 36 is placed, so that the entire airflow passes through a gap (heat exchange area) in the evaporator 36.

Although not shown, the evaporator 36 is interposed in a refrigerant circulation passage extending from the engine room 4 to the machine room 12. In the refrigerant circulation passage, a compressor, a condenser, a receiver, and an expansion valve are interposed as well. When motive power is transmitted from the engine to the compressor by means of an electromagnetic clutch, the compressor circulates a refrigerant through the refrigerant circulation passage, and the refrigerant is evaporated in the evaporator 36. When the airflow passes through the gap in the evaporator 36 during the evaporation of the refrigerant, the airflow loses evaporation heat to be cool.

A heater core 38 is set in the housing 14. The heater core 38 is placed downstream from the evaporator 36 as viewed in the flowing direction of the airflow. The front face of the heater core 38, which is located on the side of the evaporator 36, has an area smaller than a cross sectional area of a portion of the housing 14, in which the heater core 38 is located, so that only a portion of the airflow that has passed through the evaporator 36 passes through a gap (heat exchange area) in the heater core 38.

Although not shown, the heater core 38 is interposed in a branch passage for engine coolant, which extends from the engine room 4 to the machine room 12, together with a hot water valve. The branch passage is connected to a circulation passage for the engine coolant that circulates between the engine and a radiator so that the heater core 38 and the radiator are arranged in parallel with each other. If the hot water valve is opened while the engine coolant circulates through the circulation passage, the coolant (hot water) heated by the engine flows into the branch passage, and the heater core 38 is then heated by the hot water. The airflow passes through the gap in the heater core 38 that has been heated, whereby the airflow is heated.

Further installed in the housing 14 are an inside/outside-air switching damper 40, a defroster damper 42a, a face damper 42b, a foot damper 42c, and a heater core damper 44, serving as a plurality of doors for switching air passages, that is, passages for the airflow produced by the blower 32.

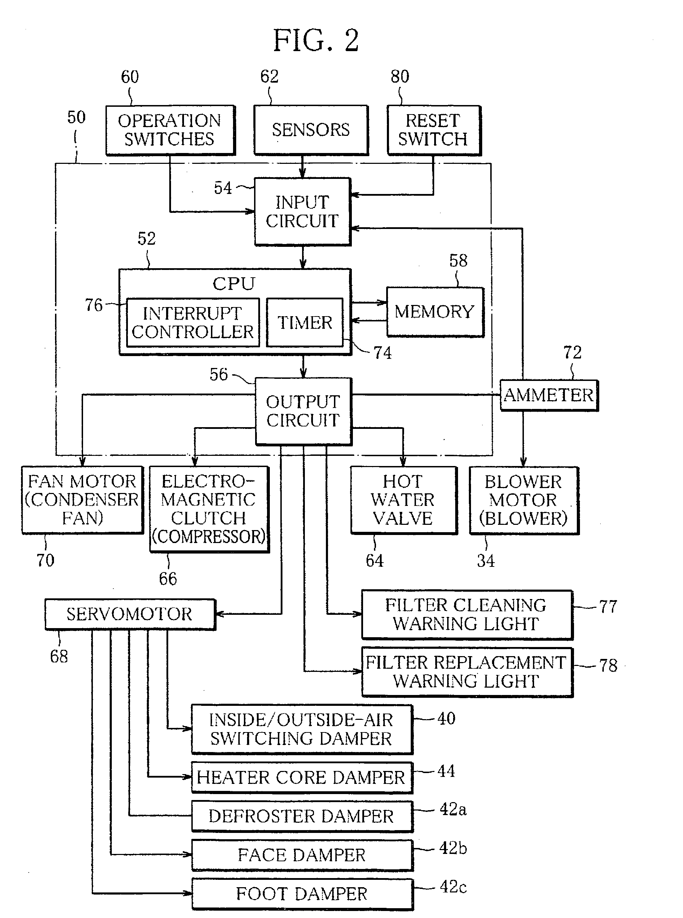

In the machine room 12, a controller 50 of the vehicle air-conditioning system is also installed. The controller 50 comprises, for example, a microcomputer. The controller 50, as shown in FIG. 2, includes a CPU (central processing unit) 52, an input circuit 54, an output circuit 56 and a memory 58. Connected to the input circuit 54 are operation switches 60 and a group of sensors 62 facing the passenger compartment 6. The group of sensors 62 includes a plurality of sensors for measuring temperature of the passenger compartment 6, outside air temperature, amount of solar radiation, airflow temperature in the downstream side of the evaporator 36, and temperature of the engine coolant.

Connected to the output circuit 56 of the controller 50 are the blower motor 34, the hot water valve 64, the electromagnetic clutch 66 of the compressor, a servomotor 68 and a fan motor 70.

The vehicle air-conditioning system further has clogging detection and warning means for detecting clogging in the filter 35 which is caused by dust and lint, and providing a warning for filter cleaning or replacement. The clogging detection and warning means has an ammeter 72 serving as a clogging detection sensor. The ammeter 72 is interposed in an electric supply line that connects between the output circuit 56 of the controller 50 and the blower motor 34, and is capable of measuring a value of electric current that is supplied to the blower motor 34. A signal output terminal of the ammeter 72 is connected to the input circuit 54, and the electric current value that has been measured by the ammeter 72 is inputted to the input circuit 54.

The clogging detection and warning means has a timer 74 and an interrupt controller 76 which are built-in in the CPU 52 of the controller 50. The timer 74 and the interrupt controller 76 periodically cause the CPU 52 to execute the interrupt routine for clogging detection which is stored in the memory 58.

The clogging detection and warning means further includes a filter cleaning warning light 77 and a filter replacement warning light 78 serving as output means for informing an occupant and the like of the necessity of the cleaning or replacement of the filter 35. The filter cleaning and replacement warning lights 77 and 78 are arranged on the instrument panel 10 so as to face the passenger compartment 6.

The clogging detection and warning means has a manual reset switch 80 that is disposed in the machine room 12. The reset switch 80 is connected to the input circuit 54 of the controller 50. The reset switch 80 is turned on immediately after the replacement of the filter 35, for example, by a person who changes the filter.

In the vehicle air-conditioning system, the controller 50 drives the blower motor 34, the hot water valve 64, the electromagnetic clutch 66 of the compressor, the servomotor 68 and the fan motor 70 as appropriate based upon an occupant's command provided through the operation switches 60, information obtained from the group of sensors 62, and a main program and data stored in the memory 58, to thereby implement air-conditioning control of the passenger compartment 6.

In the controller 50, the execution of the main program is periodically discontinued, and the interrupt routine for the detection and warning of the clogging of the filter 35 is carried out.

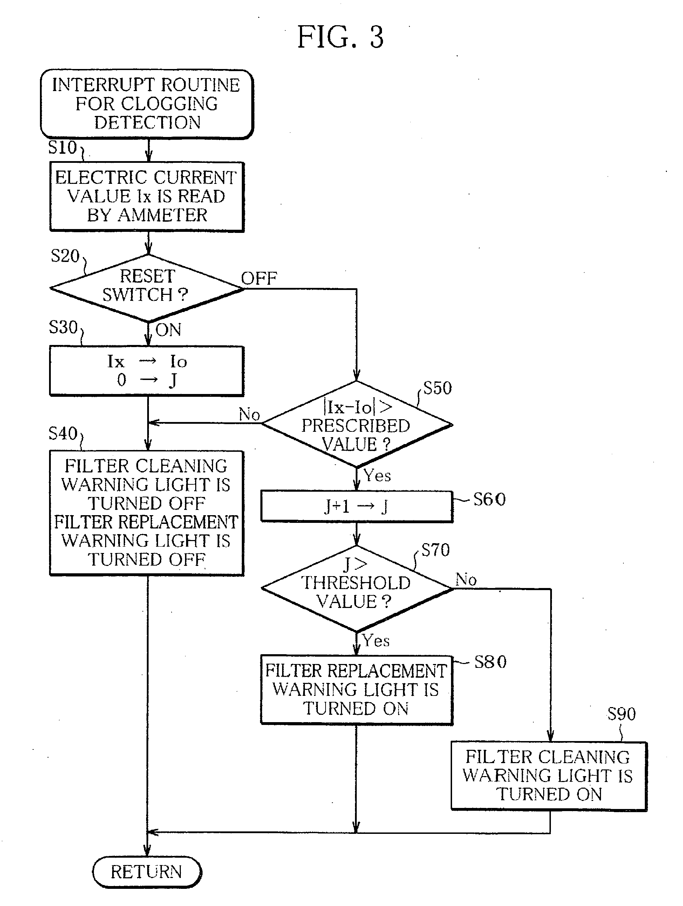

More concretely, as shown in FIG. 3, first in the interrupt routine, an electric current value Ix measured by the ammeter 72 is read into the CPU 52 through the input circuit 54 (Step S10).

After the electric current value Ix is read in, a determination is made whether the reset switch 80 has been turned on or not after the latest execution of the interrupt routine (Step S20). If the reset switch 80 has been turned on, the electric current value Ix is substituted for an initial value Io, and the number of times of clogging J is reset to zero (Step S30). Thereafter, the filter cleaning and replacement warning lights 77 and 78 are turned off (Step S40), and the interrupt routine is ended.

If it is judged in Step S20 that the reset switch 80 has been off, it is determined as to whether variation of the electric current value Ix from the initial value Io is higher than a prescribed value (Step S50). If it is determined that the variation is equal to or lower than the prescribed value, the interrupt routine advances to Step S40 and is then ended. If the variation is higher than the prescribed value, after the number of times of clogging J is incremented by 1 (Step S60), and it is determined as to whether the number of times of clogging J exceeds a prescribed threshold value (Step S70).

If Step S70 determines that the number of times of clogging J exceeds the threshold value, the filter replacement warning light 78 is turned on (Step S80), and subsequently, the interrupt routine is ended. In contrast, if it is determined that the number of times of clogging J is equal to or less than the threshold value, the filter cleaning warning light 77 is turned on (Step S90). Thereafter, the interrupt routine is ended.

In the vehicle air-conditioning system, the filter clogging detection and warning means provides a warning to clean or replace the filter 35 according to the detected number of times of clogging J. Therefore, the person who is engaged in monitoring and maintenance of the vehicle air-conditioning system and the occupant clean and recycle the filter 35 and yet can properly know replacement time of the filter 35. As a result, the number of filters 35 to be discarded is reduced. Consequently, the vehicle air-conditioning system is environmentally friendly and is reduced in running cost.

In the vehicle air-conditioning system, the clogging detection and warning means for the filter 35 includes the reset switch 80 serving as reset means for resetting the number of times of clogging J. This prevents the filter replacement warning light 78 from being instantly turned on right after the filter 35 is replaced.

The reset switch 80 is a manual switch, and with a simple construction, the filter replacement warning light 78 is prevented from being turned on right after the filter 35 is changed.

In the vehicle air-conditioning system, the clogging detection and warning means measures the electric current value Ix that is supplied to the blower motor 34, and detects clogging in the filter 35 based upon the obtained measurement result. Accordingly, the clogging in the filter 35 is detected without fail, and the degradation of the air-conditioning performance is prevented.

In the vehicle air-conditioning system, the clogging detection and warning means repeats the measurement of the electric current value Ix. When the variation from the initial value Io in the obtained measurement result exceeds the prescribed value, it is determined that clogging has occurred in the filter 35. As a consequence, the clogging in the filter 35 is reliably detected, and the degradation of the air-conditioning performance is prevented.

The present invention is not limited to the first embodiment, and may be modified in various ways. For instance, the interrupt routine may be irregularly carried out according to demands from other peripheral devices.

According to the first embodiment, the controller 50 that executes the main program for air-conditioning carries out the program for clogging detection as the interrupt routine. However, a controller exclusive for clogging detection and warning may be provided.

In the first embodiment, the numeric of the threshold value is not particularly limited. Moreover, the filter replacement warning light 78 may be turned on according to the frequency of occurrence of clogging per unit of time.

A sensor for detecting clogging is not limited to the ammeter 72. In stead of using the ammeter 72, as shown in FIG. 1, a sensor 82 may be disposed in between the filter 35 and the blower 32. The sensor 82 is, for example, a pressure sensor, and detects pressure in between the filter 35 and the blower 32. In this second embodiment, too, based upon the pressure detected by the sensor 82, the clogging in the filter 35 is reliably detected.

Furthermore, the sensor 82 may be a wind velocity sensor, which detects a flow rate of the airflow near the filter 35. In this third embodiment, too, based upon the flow rate detected by the sensor 82, the clogging in the filter 35 is reliably detected.

Lastly, needless to say, the clogging detection and warning means, namely the airflow filter device of the present invention, can be employed not only in the vehicle air-conditioning system but also in the air-conditioning system for a construction machine such as a crane. In the air-conditioning system for a construction machine, the filter 35 is liable to be clogged by dust. Therefore, the present invention provides a great advantage.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An airflow filter device comprising:
a filter (35) for purifying an airflow;
a clogging detection unit (50, 72, 82) for detecting clogging in the filter (35); and
a warning unit (50, 77, 78) that provides a warning based upon a result detected by the clogging detection unit (50, 72, 82),
**characterized in that:**
the warning unit (50, 77, 78) provides a warning to clean the filter (35) when the number of times of clogging in the filter (35), which is detected by the clogging detection unit (50, 72, 82), is equal to or less than a threshold value, and provides a warning to replace the filter (35) when the number of times of clogging exceeds the threshold value.

2. The airflow filter device according to claim 1, wherein:
the warning unit (50, 77, 78) includes a reset unit for resetting the number of times of clogging.

3. The airflow filter device according to claim 2, wherein:
the reset unit includes a manual switch (80).

4. An air-conditioning system for a vehicle or construction machine comprising:
the airflow filter device according to any one of claims 1 to 3; and
an air-conditioning unit housing in which the filter (35) is disposed inside to be positioned upstream of a blower (32) and an evaporator (36) as viewed in a flowing direction of the airflow.

5. The air-conditioning system according to claim 4, wherein:
the clogging detection unit (50, 72, 82) measures at least one of a value of electric current supplied to a motor (34) for driving the blower (32), pressure in between the filter (35) and the blower (32), and a flow rate of the airflow near the filter (35), and detects clogging in the filter (35) based upon an obtained measurement result.

6. The air-conditioning system according to claim 5, wherein:
the clogging detection unit (50, 72, 82) repeats the measurement and determines that clogging occurs in the filter (35) when variation from an initial value in the obtained measurement result exceeds a prescribed value.

## Patentansprüche

1. Luftstromfiltervorrichtung, die aufweist:
einen Filter (35) zum Reinigen eines Luftstroms;
eine Verstopfungs-Erfassungseinheit (50, 72, 82) zum Erfassen einer Verstopfung im Filter (35); und
eine Warneinheit (50, 77, 78), die basierend auf einem Ergebnis, das durch die Verstopfungs-Erfassungseinheit (50, 72, 82) erfasst wird, eine Warnung vorsieht, **dadurch gekennzeichnet, dass:**
die Warneinheit (50, 77, 78) eine Warnung zum Reinigen des Filters (35) vorsieht, wenn der Wert der Anzahl der Verstopfungen im Filter (35), der durch die Verstopfungs-Erfassungseinheit (50, 72, 82) erfasst wird, gleich oder kleiner als ein Schwellenwert ist, und eine Warnung zum Auswechseln des Filters (35) vorsieht, wenn der Wert der Anzahl der Verstopfungen den Schwellenwert übersteigt.

2. Luftstromfiltervorrichtung nach Anspruch 1, wobei
die Warneinheit (50, 77, 78) eine Zurücksetzeinheit zum Zurücksetzen des Werts der Anzahl der Verstopfungen beinhaltet.

3. Luftstromfiltervorrichtung nach Anspruch 2, wobei die Zurücksetzeinheit einen manuellen Schalter (80) beinhaltet.

4. Klimaanlagensystem für ein Fahrzeug oder eine Baumaschine, das aufweist:
die Luftstromfiltervorrichtung nach einem der Ansprüche 1 bis 3; und
ein Gehäuse einer Klimaanlageneinheit, innerhalb dessen der Filter (35) in Strömungsrichtung des Luftstroms gesehen derart angeordnet ist, dass er stromaufwärts eines Gebläses (32) und eines Verdampfers (36) angeordnet ist.

5. Klimaanlagensystem nach Anspruch 4, wobei die Verstopfungs-Erfassungseinheit (50, 72, 82) zumindest einen der Werte des elektrischen Stroms, der einem Motor (34) zum Antreiben des Gebläses (32) zugeführt wird, des Drucks zwischen dem Filter (35) und dem Gebläse (32) und einer Fließgeschwindigkeit des Luftstroms in der Nähe des Filters (35) misst, und basierend auf einem erhaltenen Messergebnis das Verstopfen im Filter (35) erfasst.

6. Klimaanlagensystem nach Anspruch 5, wobei die Verstopfungs-Erfassungseinheit (50, 72, 82) die Messung wiederholt und bestimmt, dass das Verstopfen in dem Filter (35) auftritt, wenn in dem erhaltenen Messergebnis die Abweichung von einem Anfangswert einen vorgeschriebenen Wert überschreitet.

## Revendications

1. Dispositif de filtre à air comprenant :
- un filtre (35) pour filtrer une veine d'air,
- une unité de détection de colmatage (50, 72, 82), pour détecter le colmatage du filtre (35), et
- une unité d'avertissement (50, 77, 78) qui fournit un signal d'avertissement selon le résultat détecté par l'unité de détection de colmatage (50, 72, 82),
**caractérisé en ce que**
l'unité d'avertissement (50, 77, 78) fournit un signal d'avertissement pour nettoyer le filtre (35) si le nombre de fois de colmatage du filtre (35) qui est détecté par l'unité de détection de colmatage (50, 72, 82) est égal ou inférieur à une valeur de seuil, et fournit un signal d'avertissement pour remplacer le filtre (35) si le nombre de fois de colmatage dépasse la valeur de seuil.

2. Dispositif de filtre à air selon la revendication 1,
selon lequel
l'unité d'avertissement (50, 77, 78) comporte une unité de remise à l'état initial pour remettre à l'état initial le nombre de fois du colmatage.

3. Dispositif de filtre à air selon la revendication 2,
selon lequel
l'unité de remise à l'état initial comporte un commutateur manuel (80).

4. Système de conditionnement d'air d'un véhicule ou d'une machine de construction comportant :
- un dispositif de filtre à air selon les revendications 1 à 3, et
- une unité de conditionnement d'air logeant le filtre à air (35) à l'intérieur pour être placée en amont d'un ventilateur (32) et d'un évaporateur (36) selon le sens de passage de la veine d'air.

5. Système de conditionnement d'air selon la revendication 4,
**caractérisé en ce que**
l'unité de détection de colmatage (50, 72, 82) mesure au moins une valeur d'un courant électrique alimentant le moteur (34) entraînant le ventilateur (32), la pression entre le filtre (35) et le ventilateur (32) et le débit de la veine d'air à proximité du filtre (35), elle détecte aussi le colmatage du filtre (35) en fonction des résultats de mesure obtenus.

6. Système de conditionnement d'air selon la revendication 5,
selon lequel
l'unité de détection de colmatage (50, 72, 82) répète la mesure et considère que le colmatage se produit dans le filtre (35) si la variation entre la valeur initiale des résultats de mesure obtenus dépasse une valeur prescrite.
